# EUROPEAN PATENT APPLICATION

(11) **EP 4 475 304 A1**
(43) Date of publication of application: **11.12.2024**
(21) Application number: 23898369.6
(22) Date of filing: 01.12.2023
(51) Int. Cl.: H01M 50/242, H01M 50/264, H01M 50/289, H01M 50/204

(54) **BATTERY PACK**

(30) Priority: 02.12.2022 KR 20220166597; 17.03.2023 KR 20230035257
(71) Applicant: LG Energy Solution, Ltd., Seoul 07335 (KR)
(72) Inventor: JEON, Jong Pil, Daejeon 34122 (KR); KIM, Min Bum, Daejeon 34122 (KR); SHIN, Ju Hwan, Daejeon 34122 (KR); SEONG, Jun Yeob, Daejeon 34122 (KR); LEE, Hyoung Suk, Daejeon 34122 (KR)
(74) Representative: Plasseraud IP
(86) International application number: PCT/KR2023/019650
(87) International publication number: WO 2024/117846

(57) **Abstract**

According to an embodiment of the present invention, a battery pack may include a housing with a plate part and side walls, first to third battery cell assemblies arranged on the plate part in a first direction parallel to an upper surface of the plate part and each including a cell stack with a plurality of battery cells, a first cross-beam, and a second cross-beam spaced apart from the first cross-beam with the cell stack interposed therebetween, and a reinforcement band coupled to the first cross-beam of the first battery module and the second cross-beam of the third battery module. Further, the first cross-beam and the second cross-beam have different shapes.

## Description

### [Technical Field]

The present invention relates to a battery pack. The present application claims the benefit of priority based on Korean Patent Application No. 10-2022-0166597, filed on December 2, 2022 and Korean Patent Application No. 10-2023-0035257, filed on March 17, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

When a secondary battery is repeatedly charged and discharged, a swelling phenomenon that a case of the secondary battery swells occurs due to a chemical reaction of materials inside the secondary battery. The swelling phenomenon is particularly noticeable in pouch type battery cells with relatively low rigidity. Swelling causes a change in physical and chemical properties of pouch type battery cells and thus research is being conducted on various technologies for controlling swelling.

### [Disclosure]

### [Technical Problem]

The present invention is directed to providing a battery pack with improved reliability.

### [Technical Solution]

To address the above problem, example embodiments of the present invention may include a battery pack. The battery pack may include a housing having a plate part and side walls, first to third battery cell assemblies arranged on the plate part in a first direction parallel to an upper surface of the plate part and each including a cell stack with a plurality of battery cells, a first cross-beam, and a second cross-beam spaced apart from the first cross-beam with the cell stack interposed therebetween, and a reinforcement band coupled to the first cross-beam of the first battery module and the second cross-beam of the third battery module, wherein the first cross-beam and the second cross-beam have different shapes.

The reinforcement band may extend in the first direction.

The battery pack may further include a plurality of reinforcement bands.

The reinforcement band may be disposed on the first and second battery cell assemblies.

The battery pack may further include a plurality of fastening members configured to pass through the reinforcement band, and configured to fix the first cross-beam of the first battery module and the second cross-beam of the third battery module to the plate part of the housing.

The battery pack may further include a plurality of fastening members configured to pass through the reinforcement band, and configured to fix the second cross-beam of the first battery module and the first cross-beam of the second battery module to the plate part of the housing.

Example embodiments of the present invention may include a battery pack. The battery pack may include a housing with a plate part and side walls, first to third battery cell assemblies arranged on the plate part in a first direction parallel to an upper surface of the plate part and each including a cell stack with a plurality of battery cells, a first cross-beam, and a second cross-beam spaced apart from the first cross-beam with the cell stack interposed therebetween, and a first reinforcement band coupled to the first cross-beam of the first battery module, the second cross-beam of the first battery module, and the first cross-beam of the second battery module.

The battery pack may further include a plurality of fastening members configured to pass through the first reinforcement band, and configured to fix the first cross-beam of the first battery module, the second cross-beam of the first battery module, and the first cross-beam of the second battery module to the plate part of the housing.

The first reinforcement band may be disposed on the first battery module.

The battery pack may further include a second reinforcement band coupled to the second cross-beam of the first battery module, the first cross-beam of the second battery module, the second cross-beam of the second battery module, and the first cross-beam of the third battery module.

The battery pack may further include a plurality of fastening members configured to pass through the second reinforcement band, and configured to fix the second cross-beam of the first battery module, the first cross-beam of the second battery module, the second cross-beam of the second battery module, and the first cross-beam of the third battery module to the plate part of the housing.

The battery pack may further include a third reinforcement band coupled to the second cross-beam of the second battery module, the first cross-beam of the third battery module, and the second cross-beam of the third battery module.

The battery pack may further include a plurality of fastening members configured to pass through the third reinforcement band, and configured to fix the second cross-beam of the second battery module, the first cross-beam of the third battery module, and the second cross-beam of the third battery module to the plate part of the housing.

### [Advantageous Effects]

A battery pack according to example embodiments of the present invention includes one or more reinforcement bands coupled to a cross-beam of a battery cell assembly. Accordingly, swelling of a cell stack can be prevented and the reliability of the battery pack can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view of a battery pack according to example embodiments of the present invention.
FIG. 2 is a cross-sectional view taken along line 1I-1I' of FIG. 1.
FIG. 3 is a plan view of a battery pack according to example embodiments of the present invention.
FIG. 4 is a cross-sectional view taken along line 31-31' of FIG. 3.
FIG. 5 is a plan view of a battery pack according to example embodiments of the present invention.
FIG. 6 is a plan view of a battery pack according to example embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments of the present invention set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

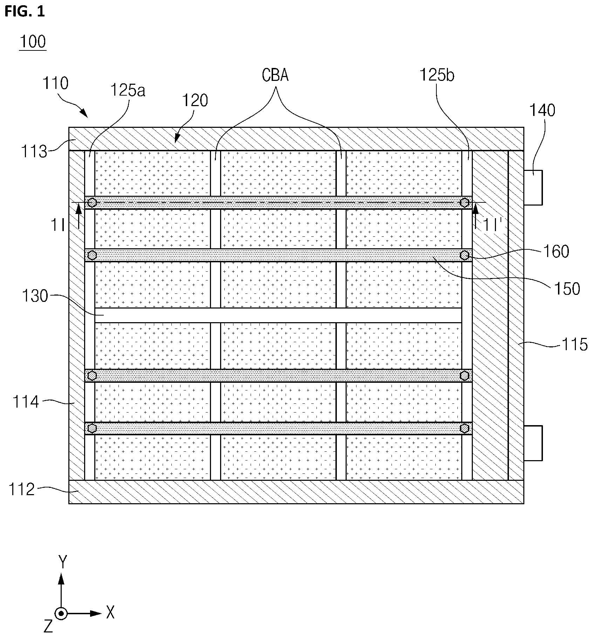

FIG. 1 is a plan view of a battery pack 100 according to example embodiments of the present invention.

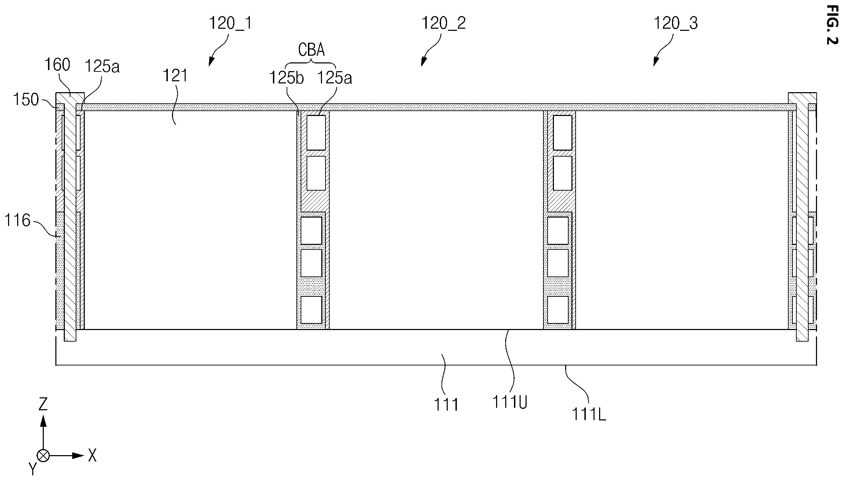

FIG. 2 is a cross-sectional view taken along line 1I-1I' of FIG. 1.

Referring to FIGS. 1 and 2, the battery pack 100 may include a housing 110, a plurality of battery cell assemblies 120, a center beam 130, a plurality of exhaust devices 140, a plurality of reinforcement bands 150, and a plurality of fastening members 160. The battery pack 100 is a final form of a battery system mounted on a mobility or the like.

The housing 110 may provide a space for arranging the plurality of battery cell assemblies 120 therein. The housing 110 may include a plate part 111 and side walls 112, 113, 114, and 115.

The plate part 111 may include an upper surface 111U and a lower surface 111L that are substantially parallel to each other. The upper surface 111U and the lower surface 111L may be opposite to each other. Two directions substantially parallel to the upper surface 111U of the plate part 111 are defined as an X-axis direction and a Y-axis direction, and a direction substantially perpendicular to the upper surface 111U of the plate part 111 is defined as a Z-axis direction. The X-axis direction, the Y-axis direction, and the Z-axis direction may be substantially perpendicular to one another. Unless otherwise mentioned, the definition of directions will apply to the following drawings.

According to example embodiments of the present invention, the plate part 111 may include a plurality of plates welded together by friction stir welding. When the plate part 111 is formed by friction stir welding, the plate part 111 may include a boundary surface between different plates. According to example embodiments of the present invention, the plate part 111 may be configured as a single plate.

The plate part 111 may include a plurality of cooling channels that are flow paths of a cooling fluid. The plate part 111 may include a plurality of cavities for reducing the weight of the plate part 111. Each of the plurality of cooling channels and the plurality of cavities may extend in the X-axis direction.

The side walls 112, 113, 114, and 115 may be coupled to the plate part 111. The side walls 112, 113, 114, and 115 may extend in the Z-axis direction. The side walls 112, 113, 114, and 115 may include empty spaces therein and thus the weight of the side walls 112, 113, 114, and 115 may decrease.

The plurality of battery cell assemblies 120 may be disposed on the upper surface 111U of the plate part 111. The plate part 111 may support the plurality of battery cell assemblies 120. The side walls 112, 113, 114, and 115 may horizontally surround the plurality of battery cell assemblies 120.

Each of the plurality of battery cell assemblies 120 may include a cell stack 121, a first cross-beam 125a, and a second cross-beam 125b. The cell stack 121 may include a plurality of battery cells.

A battery cell is a basic unit of a lithium ion battery, i.e., a secondary battery. The battery cell includes an electrode assembly, an electrolyte, and a case. Battery cells are classified into a lithium ion battery, a lithium ion polymer battery, a lithium polymer battery, etc. according to a configuration of an electrode assembly and an electrolyte. A market share of lithium ion polymer batteries in the field of secondary battery is increasing due to a low possibility of leakage of an electrolyte and easiness in manufacturing.

A battery cell may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

According to example embodiments of the present invention, the plurality of battery cells of the cell stack 121 may be connected in series and/or in parallel. For example, the plurality of battery cells may be connected to each other in series. As another example, the plurality of battery cells may be connected to each other in parallel. As another example, the cell stack 121 may include a plurality of banks connected to each other in series and in parallel, and each of the plurality of banks may include a plurality of battery cells connected to each other in parallel.

According to example embodiments of the present invention, the cell stack 121 may further include a plurality of separators. The plurality of separators may horizontally support the plurality of battery cells to prevent swelling of the plurality of battery cells. According to embodiments of the present invention, the plurality of separators may be thermal barriers. According to example embodiments of the present invention, each of the plurality of separators may have a high melting temperature and a low thermal conductivity. According to example embodiments of the present invention, each of the plurality of separators may include a flame retardant material such as a ceramic and a coated glass material. According to example embodiments of the present invention, the plurality of separators may be configured to emit a fire retarding material and a fire extinguishing agent when a thermal runaway event occurs.

The first cross-beam 125a and the second cross-beam 125b of the plurality of battery cell assembly 120 may be spaced apart from each other with the cell stack 121 interposed therebetween. The first cross-beam 125a and the second cross-beam 125b may cover laterial sides of the cell stack 121. The first cross-beam 125a and the second cross-beam 125b may be fixed to the cell stack 121 by an adhesive material or the like.

The plurality of battery cell assemblies 120 may include a first battery cell assembly 120_1, a second battery cell assembly 120_2, and a third battery cell assembly 120_3. The first to third battery cell assemblies 120_1, 120_2, and 120_3 may be arranged in the X-axis direction. The first to third battery cell assemblies 120_1, 120_2, and 120_3 may be arranged sequentially.

The first cross-beam 125a and the second cross-beam 125b may have different shapes. The first cross-beam 125a and the second cross-beam 125b may have complementary shapes.

The first cross-beam 125a of the first battery cell assembly 120_1 may be coupled to a support 116 on the plate part 111. The plurality of fastening members 160 may pass through the reinforcement bands 150, the first cross-beam 125a, and the support 116. The plurality of fastening members 160 may include a mechanical coupling means such as a bolt or the like. The fastening members 160 may be coupled to the plate part 111. Accordingly, the first cross-beam 125a and the first battery cell assembly 120_1 may be fixed to the plate part 111 of the housing 110.

The second cross-beam 125b of the first battery cell assembly 120_1 may be coupled to the first cross-beam 125a of the second battery cell assembly 120-2. The second cross-beam 125b of the first battery cell assembly 120_1 may be engaged with the first cross-beam 125a of the second battery cell assembly 120_2. The second cross-beam 125b of the first battery cell assembly 120_1 and the first cross-beam 125a of the second battery cell assembly 120_2 may form a cross-beam assembly CBA.

The second cross-beam 125b of the second battery cell assembly 120_2 may be coupled to the first cross-beam 125a of the third battery cell assembly 120_3. The second cross-beam 125b of the second battery cell assembly 120_2 may be engaged with the first cross-beam 125a of the third battery cell assembly 120_3. The second cross-beam 125b of the second battery cell assembly 120_2 and the first cross-beam 125a of the third battery cell assembly 120_3 may form a cross-beam assembly CBA.

The plurality of fastening members 160 may be coupled to the plate part 111 of the housing 110 while passing through the reinforcement bands 150 and the second cross-beam 125b of the third battery cell assembly 120_3. Accordingly, the reinforcement bands 150 and the second cross-beam 125b of the third battery cell assembly 120_3 may be fixed to the plate part 111 of the housing 110.

The cross-beam assembly CBA may be interposed between adjacent cell stacks 121. The cross-beam assembly CBA may extend in a direction perpendicular to the center beam 130 (i.e., the Y-axis direction). The cross-beam assembly CBA may isolate the cell stacks 121 in the X-axis direction.

According to example embodiments of the present invention, each of the reinforcement bands 150 may include an elastic material. According to other example embodiments of the present invention, each of the reinforcement bands 150 may include a soft material such as a metal. Each of the reinforcement bands 150 is coupled to the first cross-beam 125a of the first battery cell assembly 120_1 and the second cross-beam 125b of the third battery cell assembly 120_3 and thus swelling of battery cells of the cell stack 121 of each of the first to third battery cell assemblies 120_1, 120_2, and 120_3 may be prevented. FIG. 1 illustrates that two reinforcement bands 150 are disposed on the plurality of battery cell assemblies 120 but three or more reinforcement bands 150 may be disposed on each of the plurality of battery cell assemblies 120.

The plurality of battery cell assemblies 120 may be arranged in the X-axis direction and the Y-axis direction. In FIG. 1, the number of battery cell assemblies 120 arranged in the X-axis direction is three, and the number of battery cell assemblies 120 arranged in the Y-axis direction is two. Accordingly, an array of the plurality of battery cell assemblies 120 may be a 3x2 array. The plurality of battery cell assemblies 120 arranged in an array of MxN will be easily derived by those of ordinary skill in the art, based on the above description. Here, M and N are each an integer of 2 or more.

The center beam 130 may isolate elements disposed on the housing 110 from each other. Accordingly, the center beam 130 may prevent an undesired short circuit from occurring between the plurality of battery cell assemblies 120 while protecting the plurality of battery cell assemblies 120.

The center beam 130 may extend between side walls 112, 113, 114, and 115 facing each other. The center beam 130 may extend in the X-axis direction. The center beam 130 may be in contact with one of the side walls 112, 113, 114, and 115. The center beam 130 may isolate the plurality of battery cell assemblies 120 from each other. The center beam 130 may be interposed between the plurality of battery cell assemblies 120.

The plurality of exhaust devices 140 may be coupled to the side wall 115. At least a part of the side walls 112, 113, 114, and 115 may include an exhaust path connected to the plurality of exhaust devices 140. The plurality of exhaust devices 140 may be configured to delay thermal propagation by discharging a high-temperature gas from the inside of the battery pack 100 to the outside when at least one of the plurality of battery cell assemblies 120 is in a thermal runway state.

Here, the thermal runaway state of the plurality of battery cell assemblies 120 is a state in which a change of temperature of the plurality of battery cell assemblies 120 accelerates the change of temperature, i.e., an uncontrollable positive feedback. The temperature of the plurality of battery cell assemblies 120 that are in the thermal runaway state sharply increase, and a large amount of high-pressure gas and combustion debris are discharged.

The battery pack 100 may further include electronic components. The electronic components may be disposed on the housing 110. The electronic components may be disposed between the side wall 112 on which the exhaust devices 140 are installed and the plurality of battery cell assemblies 120. The electronic components may include an electronic device required to drive a battery pack.

The electronic components may include, for example, a battery management system (BMS). The BMS may be configured to monitor, balance, and control the battery pack. Monitoring of the battery pack 100 may include measuring voltages and currents of certain nodes inside the plurality of battery cell assemblies 120 and measuring temperatures at set positions in the battery pack 100. The battery pack 100 may include measuring instruments for measuring voltages, currents, and temperatures as described above.

Balancing of the battery pack 100 is an operation of reducing a deviation between the plurality of battery cell assemblies 120. Controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and an external load (e.g., a motor of a vehicle), when abnormal voltage such as voltage surges occurs.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

The battery pack 100 may further include a lid plate coupled to the side walls 112, 113, 114, and 115. The lid plate may cover elements disposed inside the battery pack 100 such as the battery cell assemblies 120 and the electronic components. The lid plate may be fixed to the battery pack 100 by a mechanical coupling means, e.g., a bolt.

### (Second Embodiment)

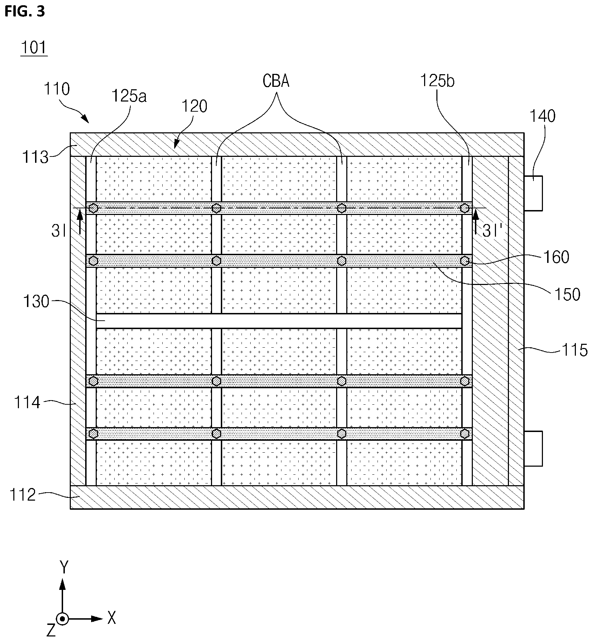

FIG. 3 is a plan view of a battery pack 101 according to example embodiments of the present invention.

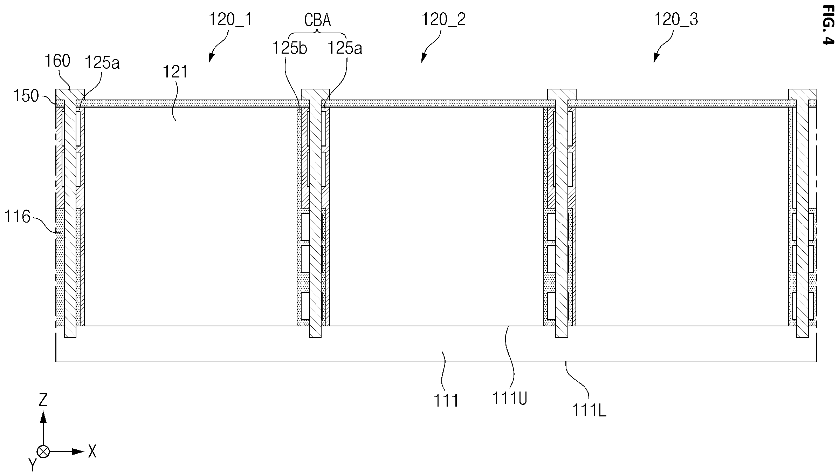

FIG. 4 is a cross-sectional view taken along line 31-31' of FIG. 3.

Referring to FIGS. 3 and 4, the battery pack 101 may include a housing 110, a plurality of battery cell assemblies 120, a center beam 130, a plurality of exhaust devices 140, a plurality of reinforcement bands 150, and a plurality of fastening members 160.

The housing 110, the plurality of battery cell assemblies 120, the center beam 130, the plurality of exhaust devices 140, and the plurality of reinforcement bands 150 are substantially the same as those described above with reference to FIGS. 1 and 2, and thus, a redundant descriptions thereof is omitted herein.

Some of the plurality of fastening members 160 may be coupled to a plate part 111 of the housing 110 while passing through the reinforcement bands 150 and a cross-beam assembly CBA . Some of the plurality of fastening members 160 may be fixed to the plate part 111 of the housing 110 while passing through the reinforcement bands 150, a second cross-beam 125b of a first battery cell assembly 120_1, and a first cross-beam 125a of a second battery cell assembly 120_2, . Some of the plurality of fastening members 160 may be fixed to the plate part 111 of the housing 110 while passing through the reinforcement bands 150, a second cross-beam 125b of the second battery cell assembly 120_2, and a first cross-beam 125a of a third battery cell assembly 120_3.

According to example embodiments of the present invention, each of the reinforcement bands 150 may be fixed to each of the first and second cross-beams 125a and 125b through the plurality of fastening members 160, thereby preventing swelling of battery cells of the plurality of battery cell assemblies 120.

### (Third Embodiment)

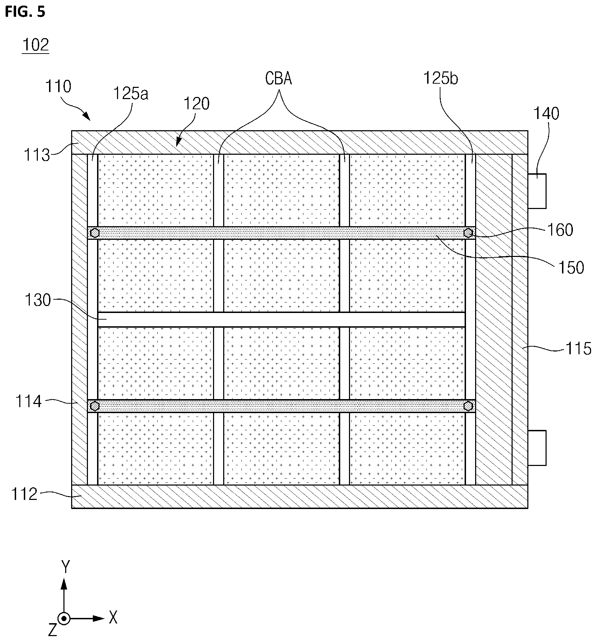

FIG. 5 is a plan view of a battery pack 102 according to example embodiments of the present invention.

Referring to FIG. 5, the battery pack 102 may include a housing 110, a plurality of battery cell assemblies 120, a center beam 130, a plurality of exhaust devices 140, reinforcement bands 150, and a plurality of fastening members 160. The battery pack 102 of FIG. 5 is the same as the battery pack of FIG. 1 except that each of the plurality of battery cell assemblies 120 overlaps a reinforcement band 150.

### (Fourth Embodiment)

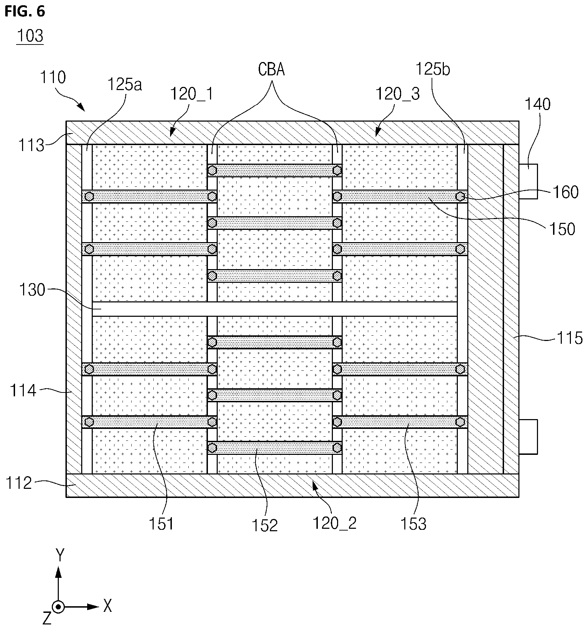

FIG. 6 is a plan view of a battery pack 103 according to example embodiments of the present invention.

Referring to FIG. 6, the battery pack 103 may include a housing 110, a plurality of battery cell assemblies 120, a center beam 130, a plurality of exhaust devices 140, first to third reinforcement bands 151, 152 and 153, and a plurality of fastening members 160.

The housing 110, the plurality of battery cell assemblies 120, the center beam 130, and the plurality of exhaust devices 140b are substantially the same as those described above with reference to FIGS. 1 and 2, and thus, a redundant descriptions thereof is omitted herein.

The first reinforcement bands 151 may overlap a first battery cell assembly 120_1. The first reinforcement bands 151 may be coupled to first and second cross-beams 125a and 125b of the first battery cell assembly 120_1 and a first cross-beam 125a of a second battery cell assembly 120_2 by the plurality of fastening members 160.

The second reinforcement bands 152 may overlap the second battery cell assembly 120_2. The second reinforcement bands 152 may be coupled to the second cross-beam 125b of the first battery cell assembly 120_1, the first and second cross-beams 125a and 125b of the second battery cell assembly 120_2, and a first cross-beam 125a of a third battery cell assembly 120_3 by the plurality of fastening members 160.

The third reinforcement bands 153 may overlap the third battery cell assembly 120_3. The third reinforcement bands 153 may be coupled to the second cross-beam 125b of the second battery cell assembly 120_2 and the first and second cross-beams 125a and 125b of the third battery cell assembly 120_3 by the plurality of fastening members 160.

The second reinforcement bands 152 and the first reinforcement bands 151 may be arranged in a staggered form. The second reinforcement bands 152 may not overlap the first reinforcement bands 151 in the X-axis direction. The third reinforcement bands 132 and the second reinforcement bands 152 may be arranged in a staggered form. The third reinforcement bands 153 may not overlap the second reinforcement bands 152 in the X-axis direction. According to example embodiments of the present invention, each of the battery cell assemblies 120 is reinforced by one of the first to third reinforcement bands 151, 152, and 153 to prevent swelling of battery cells of the battery cell assemblies 120.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a housing having a plate part and side walls;
first to third battery cell assemblies arranged on the plate part in a first direction parallel to an upper surface of the plate part and each including a cell stack with a plurality of battery cells, a first cross-beam, and a second cross-beam spaced apart from the first cross-beam with the cell stack interposed therebetween; and
a reinforcement band coupled to the first cross-beam of the first battery module and the second cross-beam of the third battery module,
wherein the first cross-beam and the second cross-beam have different shapes.

2. The battery pack of claim 1, wherein the reinforcement band extends in the first direction.

3. The battery pack of claim 1, further comprising a plurality of reinforcement bands.

4. The battery pack of claim 1, wherein the reinforcement band is disposed on the first and second battery cell assemblies.

5. The battery pack of claim 1, further comprising a plurality of fastening members passing through the reinforcement band, and configured to fix the first cross-beam of the first battery module and the second cross-beam of the third battery module to the plate part of the housing.

6. The battery pack of claim 1, further comprising a plurality of fastening members passing through the reinforcement band, and configured to fix the second cross-beam of the first battery module and the first cross-beam of the second battery module to the plate part of the housing.

7. A battery pack comprising:
a housing having a plate part and side walls;
first to third battery cell assemblies arranged on the plate part in a first direction parallel to an upper surface of the plate part and each including a cell stack with a plurality of battery cells, a first cross-beam, and a second cross-beam spaced apart from the first cross-beam with the cell stack interposed therebetween; and
a first reinforcement band coupled to the first cross-beam of the first battery module, the second cross-beam of the first battery module, and the first cross-beam of the second battery module.

8. The battery pack of claim 7, further comprising a plurality of fastening members passing through the first reinforcement band, and configured to fix the first cross-beam of the first battery module, the second cross-beam of the first battery module, and the first cross-beam of the second battery module to the plate part of the housing.

9. The battery pack of claim 7, wherein the first reinforcement band is disposed on the first battery module.

10. The battery pack of claim 7, further comprising a second reinforcement band coupled to the second cross-beam of the first battery module, the first cross-beam of the second battery module, the second cross-beam of the second battery module, and the first cross-beam of the third battery module.

11. The battery pack of claim 10, further comprising a plurality of fastening members passing through the second reinforcement band, and configured to fix the second cross-beam of the first battery module, the first cross-beam of the second battery module, the second cross-beam of the second battery module, and the first cross-beam of the third battery module to the plate part of the housing.

12. The battery pack of claim 7, further comprising a third reinforcement band coupled to the second cross-beam of the second battery module, the first cross-beam of the third battery module, and the second cross-beam of the third battery module.

13. The battery pack of claim 12, further comprising a plurality of fastening members passing through the third reinforcement band, and configured to fix the second cross-beam of the second battery module, the first cross-beam of the third battery module, and the second cross-beam of the third battery module to the plate part of the housing.
